# EUROPEAN PATENT SPECIFICATION

(11) **EP 2 340 653 B1**
(45) Date of publication and mention of the grant of the patent: **10.09.2014**
(21) Application number: 09776933.5
(22) Date of filing: 02.07.2009
(51) Int. Cl.: H04W 8/04

(54) **MINIMIZING THE SIGNALING TRAFFIC FOR HOME BASE STATIONS**
MINIMIERUNG DES SIGNALVERKEHRS FÜR HEIMATBASISSTATIONEN
RÉDUCTION À UN MINIMUM DU TRAFIC DE SIGNALISATION POUR STATIONS DE BASE DOMESTIQUES

(30) Priority: 16.09.2008 DE 102008047543
(43) Date of publication of application: 06.07.2011
(73) Proprietor: Deutsche Telekom AG, 53113 Bonn (DE)
(72) Inventor: KLEO, Rémi, 53332 Bornheim (DE); JACOBSOHN, Dieter, 53229 Bonn (DE)
(74) Representative: Cohausz Hannig Borkowski Wißgott
(86) International application number: PCT/EP2009/004801
(87) International publication number: WO 2010/031455

(56) References cited:
- US-A- 5 583 916
- US-A1- 2007 054 668
- US-B1- 6 529 491

## Description

The invention relates to a method for operating a mobile telephone network with public base stations in which the public base stations transmit mobile telephone signals with a first identifier code, the mobile telephone network having a home location register assigned to it in which mobile subscriber numbers are stored, and the mobile telephone network having at least one private base station to which is assigned at least one mobile telephone terminal, the private base station (HBS) transmits mobile telephone signals with a second identifier code (B) which is different from the first identifier code (A) and that an assignment of the mobile telephone terminal (UE) to the private base station (HBS) can be stored in the home location register (HLR, HSS).

Private base stations, also known as home base stations (HBS) enable the use of a mobile telephone in geographical areas within which a public mobile telephone network is either not available or is extremely underdeveloped. In this case, the home base station functions as a public base station (BTS, NODEB or ENODEB), base transceiver station, NodeB or eNodeB) via which the mobile telephone can attach to a mobile telephone network. The home base station is connected to the mobile telephone network via a broadband, mostly wired communication connection, thus enabling the calls from the mobile telephone terminal to be transmitted via the private base station to the mobile telephone network.

This is usually done via a DSL connection (digital subscriber line), enabling an "in-house supply" of a mobile telephone subscriber with all mobile telephone services. The home base station transmits UMTS (Universal Mobile Telecommunications System), GSM (Global System for Mobile Communications) or LTE (Long Term Evolution) signals like a public base station of the mobile telephone network and thus makes it possible for the mobile telephone subscriber to utilize the services of the mobile telephone network, in particular also in cases when the mobile telephone network does not provide any coverage at the location of the private base station.

Private base stations are, however, increasingly being used also within well developed mobile telephone networks, for example to be able to offer zones with particularly low rates. A private mobile telephone subscriber can, for example, within his private premises, by means of the transmitter/receiver range of a private base station installed there, create a so-called "home zone" within which he can use a mobile telephone at especially low rates or even free of charge. In the same way, it is also possible, for example, to provide an arrangement of several private base stations on the premises of a company so that company employees can make calls via these network access points into the mobile telephone network at a low rate.

Access to the private base station is therefore generally restricted to a few subscribers. To enable an authorized mobile telephone subscriber to attach to the mobile telephone network both via the public base stations (BTS, NodeB, eNodeB) and via the private base station(s) (HBS), the public base stations (BTS, NodeB, eNodeB) and the private base station (HBS) use the same identifier code. It is therefore possible for other mobile telephone subscribers to make an unauthorized attempt to attach to the home base station (HBS) in order to make calls via the mobile telephone network. This is, in particular, the case in the immediate vicinity of the private base station because the signal strength is especially high here and the mobile telephone terminals regularly select the access point to a mobile telephone network with the highest transmission power in order to assure optimal voice quality.

Through their attempts to attach, mobile telephone terminals which have no authorization to access the private base station cause request, authorization and authentification processes which result in unnecessary data transmission or signaling load in the mobile telephone network and the private base station(s).US Patent Publication 2007/0054668 A1 discloses a wireless communication system with personal or private base stations that support exclusivity. The system comprises an exclusivity data base (EDB) that is located in one of the network devices, such as the private base station, the base station controller, the mobile switching center, or the home location register. Furthermore, it stores all or a subset of information about private base stations and the mobile phones selected (authorized) to receive services from specific (designated) private base stations. Such information could be the international mobile subscriber identity (IMSI) or a mobile phone number, and a private base station identity (PBSI) that identifies private base stations and their registered owners. There is a Grand/Deny process (GDP) that is configured to have each mobile phone send a Location Update Request (LUR) containing the international mobile subscriber identity (IMSI) whenever it tries to roam or login to a specific private bases station. The LUR is sent to the EDB. The EDB checks the IMSI to determine if a particular mobile phone is authorized to receive services from the specific private base station. If authorized, the EDB sends a positive acknowledgement and let the mobile phone access the private base station. Alternatively, if the EDB finds the mobile phone is unauthorized, the EDB sends a negative acknowledgement to the public base station and access to their services is denied. In another embodiment US 2007/0054668 A1 teaches to configure (program) a subscriber identify card (SIM) of a mobile phone with a subset of EDB information that would allow the mobile phone to access services from a specified private base station. This would be done by assigning the private base station network a new Public Land Mobile Network (PLMN) code. Only selected (authorized) mobile phones with EDB SIM card programming would be allowed to roam to private base station networks using the new PLMN code.

Furthermore, US Patent 6,529,491 B1 describes a private/residential wireless communication system that uses a code division multiple access (CDMA) air interface. The private system is overlaid by a public CDMA system. The public CDMA system comprises an antenna coupled to a base station. The private system may operate on a predetermined frequency, or it may share the same radio resources with the overlaying public system. The private system may be assigned a predetermined identification (for example User Zone Identification UZID). When the private system operates on a different frequency than the overlaying public system, the private system may be assigned one (or more) predetermined User Zone(s) identification. In Particular, the public base station broadcasts the predetermined identification over a channel for reception by a radiotelephone. This instructs the radiotelephone as to what private systems are being served by the public system. Alternatively, the public system also broadcasts frequency, band class, pseudorandom noise offset information, and geographical location information regarding the private systems that are served by the public system.

United States Patent 5,583,916 discloses a method for call establishment avoiding problems when a call is routed to a subscriber to his home private branch exchange. The object is to diminish unnecessary mobility management functions pertaining to connection establishment and sending of unnecessary signaling messages. This method is achieved in that the home location register of the cellular radio system stores information on whether the subscriber is located within the service area of its home private branch exchange indicated with a home location area identifier; the call to the subscriber and the telephone number of the subscriber are routed to the first mobile services switching center; the first mobile services switching center requests the home locations register to provide routing information of the subscriber; if the subscriber is located within the service area of its home private branch exchange, in response to the routing information request placed by the first mobile services switching center the home location register sends to the first mobile services switching center a roaming number containing the home location area identifier of the subscriber and having a certain correspondence with the telephone number of the subscriber; the first mobile services switching center compares the roaming number of said subscriber with a telephone number of the subscriber and, in consequence, if said correspondence between the roaming number and the telephone number of the subscriber exists, the first mobile services switching center sends an indication of the fact that a call is to be routed to the subscriber and that the subscriber is located within the service area of its home private branch exchange to the second mobile services switching center, which has connection with the home private branch exchange within the service area of which the subscriber is located. In response to that, the second mobile services switching center does not perform the mobility management functions pertaining to normal connection establishment in the system and sends a connection establishment request to the private branch exchange of the home location are of the subscriber. In response to the connection establishment request it has received the home private branch exchange of the subscriber performs a necessary mobility management functions and establishes a connection between the subscriber and the second mobile services switching center.

The object of the present invention is to provide a method by means of which unauthorized attempts to access a private base station (HBS) are effectively prevented or at least minimized so that the signaling load in the mobile telephone network can be substantially reduced.

This object is achieved through the features of claim 1. Advantageous developments of the invention are set forth in the dependent claims.

According to the invention, a method is provided for operating a mobile telephone network with public base stations (BTS, NodeB, eNodeB) in which the public base stations transmit mobile telephone signals with a first identifier code (A), the mobile telephone network having assigned to it a home location register in which subscriber data, in particular mobile telephone subscriber numbers, are stored and the mobile telephone network having at least one private base station (HBS) to which is assigned at least one mobile telephone terminal (UE), wherein the private base station (HBS) transmits mobile telephone signals with a second identifier code (B) which is different from the first identifier code (A), an assignment of the mobile telephone terminal (UE) to the private base station (HBS) can be stored in the home location register (HLR or HSS), and wherein in the event of an access request of the mobile telephone terminal (UE) to a switching center (MSC, SGSN, MME) of the mobile telephone network, the home location register (HLR or HSS) is interrogated and the mobile telephone network sends to the mobile telephone terminal (UE) an identifier code (eB) equivalent to the second identifier code (B) if an assignment of the mobile telephone terminal (UE) to the private base station (HBS) has been stored in the home location register (HLR or HSS).

Because the private base station does not transmit the same identifier code as a public base station of the mobile telephone network, it is thus ensured that only certain mobile telephone terminals can attach to the mobile telephone network via the private base station. Since it is standard practice to have only the first identifier code, i.e. the identifier code transmitted by the mobile telephone network, stored in the mobile telephone terminal, in particular on the SIM card (Subscriber Identity Module) or USIM card (Universal Subscriber Identity Module), the private base station is in fact invisible to all mobile telephone terminals.

According to the invention, however, an identifier code (eB) equivalent to the second identifier code (B) is transmitted to authorized mobile telephone terminals for utilization of the private base stations.

The second identifier code and the equivalent identifier code are considered by the mobile telephone terminal as being equivalent. The private base station thus becomes visible to the mobile telephone terminal. This results in the advantageous situation that the mobile telephone terminal, being aware of the equivalent second identifier code, can attach to the mobile telephone network via the private base station (HBS) so that the mobile telephone subscriber can telephone flexibly both within the transmission/reception range of the private base station at a low rate and outside thereof, i.e. within the normal transmission/reception range of the public base stations of the mobile telephone network.

For unauthorized mobile telephone terminals, the private base station remains invisible since they are not aware of the second identifier code and, because they have not been assigned in the home location register, no equivalent identifier code is transmitted to them. The signaling load in the network is thus effectively reduced to a minimum.

The home location register is a database in which are stored data on the mobile telephone terminals assigned to the mobile telephone network and/or data on the mobile telephone subscribers. Preferably, upon registration of the private base station in the mobile telephone network, in particular in the case of its initial installation, an assignment of the mobile telephone terminal to the private base station can be stored in the home location register. This enables the later identification of the mobile telephone subscriber as a user of a private base station. The mobile telephone network is thus able to call up the assignments stored in the home location register.

In an advantageous development of the invention, the geographic location of the private base station can be stored in the home location register. This makes it possible to gain access from an external point to the information regarding the location of one or more private base stations assigned to a specific mobile telephone terminal.

In a further advantageous development, provision may be made for the stored geographical location of the private base station(s) to be transmitted to a switching center interrogating the home location register. This makes it possible to specify a particular geographic area to the mobile telephone network so that special procedural steps can be triggered when the mobile telephone terminal is within this area.

Preferably, the current geographical location of the mobile telephone terminal can be determined by the mobile telephone network and provision can be made such that the mobile telephone network will only send the equivalent identifier code to the mobile telephone terminal when the latter is located in the vicinity of the private base station. This also minimizes the signaling traffic since attempts by the mobile telephone terminal to attach will only be made with the equivalent identifier code when there is a likelihood that such attempts will actually be successful.

The geographical closeness of the mobile telephone terminal can also be determined through the identifier code of the mobile telephone cell.

Alternatively, it is possible that, both the first identifier code and the second identifier code can be stored in the authorized mobile telephone terminal. This ensures that the mobile telephone terminal can attach to the mobile telephone network either through the public base station or through the private base station(s) without any further procedural steps/information. The two identifier codes can be stored on the SIM or USIM card, in particular in the subscriber controlled list of the mobile telephone terminal so that the mobile telephone terminal is aware of which base stations it is authorized to use for attaching to the mobile telephone network.

Furthermore, a priority can be assigned to the second identifier code in the mobile telephone terminal so that the mobile telephone terminal will give priority to attaching to the mobile telephone network via the private base station if mobile telephone signals with the second identifier code are received. This ensures that with technical availability of the private base station (home zone), mobile telephone calls will always be conducted at the special, low rate for the private base station.

Further advantages and features of the invention are set forth in the following explanation of two embodiments, described with reference to Figures, in which
- Figure 1:: shows the attach procedure for a mobile telephone terminal with a home base station assignment,
- Figure 2:: shows the attach procedure for a mobile telephone terminal with signaling of the geographical location of the home base station.

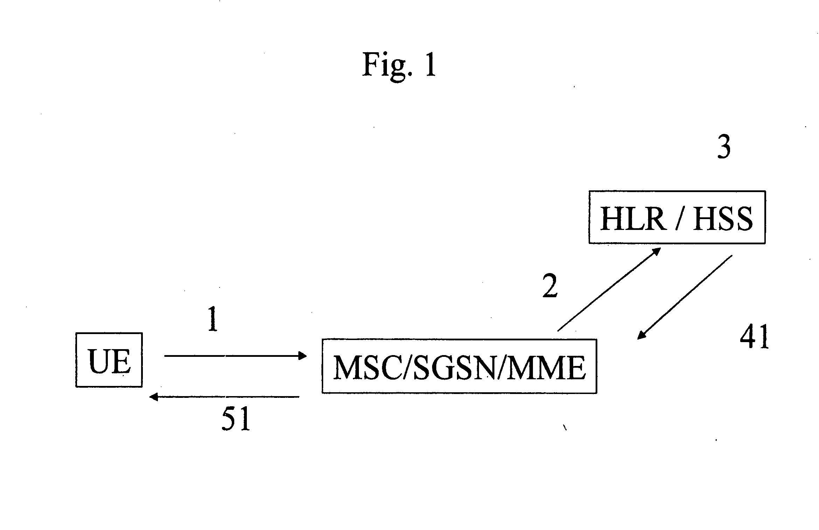

Figure 1 shows a graphical representation of the sequence of procedural steps in an attach procedure according to the invention for a mobile telephone terminal UE attaching to a cellular mobile telephone network PLMN (Public Land Mobile Network) via public base stations BTS, NodeB or eNodeB (Base Transceiver Station), wherein the latter transmit an identifier code A. The mobile telephone terminal UE is aware of the identifier code A since this is stored in the subscriber controlled list of the mobile telephone terminal. In step 1, the mobile telephone terminal sends an access request message, for example in the form of an "Attach Request", to a switching center MSC (Mobile Switching Center) or SGSN (Serving GPRS Support Node). The Mobile Switching Center is a fully digital switching center in the mobile telephone network. It constitutes the interface between the mobile network (Base Station Subsystem, BSS) and the landline network. Each MSC is assigned a fixed portion of the mobile telephone network with all base station controllers (BSC) and subordinate base transceiver stations (BTS, NodeB or eNodeB) which process and control the mobile telephone traffic.

For all ingoing or outgoing calls to or from this part of the network, the MSC handles the entire call management, location monitoring as well as the checking of the authorization (authentification) of the mobile station.

In step 2, the switching center MSC/SGSN/MME sends a request for subscriber data to the home location register HLR. The home location register is a subscriber database containing, in particular, the mobile telephone subscriber numbers and assignments of mobile telephone terminals to private base stations. In step 3, the subscriber database recognizes that the mobile telephone terminal UE is assigned to a home base station (HBS), i.e. that the mobile telephone subscriber is an HBS subscriber.

In a step 41, the database transmits the subscriber data to the switching center with the information that the mobile telephone subscriber is an HBS subscriber. The switching center then sends, in step 51, an attach response message to the mobile telephone terminal UE to the effect that the access request is accepted with an equivalent identifier code eB. The mobile telephone terminal UE treats this equivalent identifier code as an identifier code B such as transmitted by the private base station HBS, with the result that it can use the eB identifier code to attach to the mobile telephone network via the home base station HBS.

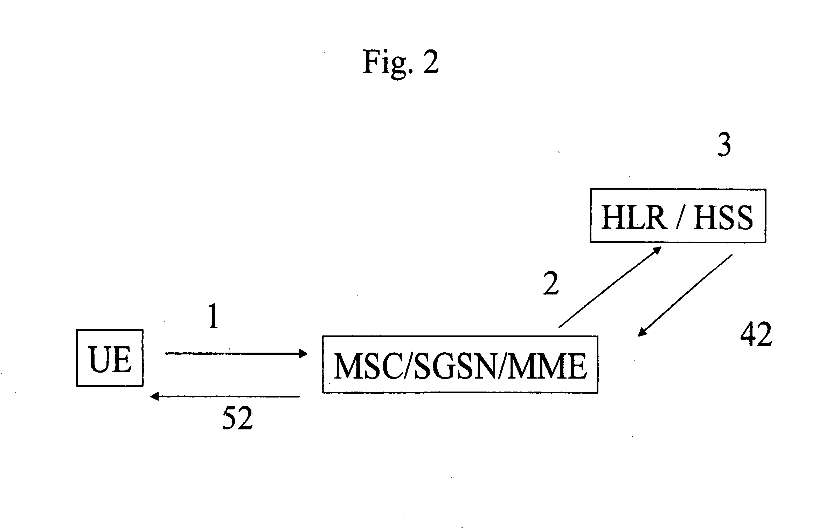

In Figure 2, the procedural sequence of the steps 1, 2 and 3 is identical to that shown in Figure 1. In addition to the information that the mobile telephone terminal UE is assigned to a home base station HBS, the geographical location of the home base station HBS is stored in the home location register HLR. In accordance with the invention, the database sends, in step 42, the subscriber data to the switching center MSC/SGSN with the additional information specifying where the mobile telephone subscriber has registered his home base station. This information can be stored in a location area identifier which is sent to the switching center MSC/SGSN/MME.

In a step 52, the mobile telephone network checks whether the mobile telephone subscriber is currently located in the notified area. This area can, in particular, be a cell of the mobile telephone network. If this is the case, in step 62, an attach response message is sent to the mobile telephone terminal UE to the effect that the access request is accepted with an equivalent identifier code eB. The mobile telephone terminal UE can then connect to the mobile telephone network via the home base station HBS using the eB identifier code.

The procedure according to the invention is described once again below with reference to three exemplary scenarios.
1. Subscribers who are registered as users of an HBS are tagged as such in the home location register HLR. The HBSs are configured such that they transmit a different PLMN network identifier code than that of the network, which is under the control of the network operator. If a subscriber who is registered as an HBS subscriber in the HLR attaches to the network via the usual Location Update, Attach, Routing Area Update procedures, the network sends the other PLMN identifier code as an "equivalent home PLMN" to the subscriber's terminal. Since the terminal considers the two HPLMNs to be equivalent, the subscriber can be reached in one or in both parts of the network, depending on the mobile telephone coverage. This procedure is illustrated in Figure 1.
2. Subscribers who are registered as users of an HBS are tagged as such in the home location register HLR and stored along with the geographical data of the location of their HBS. The HBSs are configured such that they transmit a different PLMN identifier code than that of the network, which is under the control of the network operator. If a subscriber who is registered as an HBS subscriber in the HLR attaches to the network via the usual Location Update, Attach, Routing Area Update procedures, the network sends this other PLMN identifier code as an "equivalent home PLMN" to the subscriber's terminal, if the latter is currently located in the vicinity of the HBS. This procedure is illustrated in Figure 2.
3. Subscribers who are registered as users of an HBS are tagged as such in the home location register HLR. The HBSs are configured such that they transmit a different PLMN network identifier code than that of the network, which is under the control of the network operator. Upon registering the HBS, this PLMN identifier code is entered once only into the subscriber controlled list of the subscriber. Through the defined behavior of the terminal it is thus assured that, if a network with this PLMN identifier code is available, the terminal will give priority to this network when attaching.

The method in accordance with the invention, by means of which the mobile telephone network controls the transmission of an identifier code as a function of an entry in the home location register concerning the assignment of a mobile telephone terminal to a home base station, results in reliable operation of a mobile telephone network with private base stations whose use by unauthorized mobile telephone terminals is effectively prevented. Unauthorized attempts to access the private base stations are thus effectively prevented or at least minimized so that the signaling load in the mobile telephone network can be substantially reduced.

## Claims

1. A method for operating a mobile telephone network with public base stations, in particular BTS, NodeB or eNodeB, in which the public base stations transmit mobile telephone signals with a first identifier code (A), the mobile telephone network having assigned to it a home location register in which mobile telephone subscriber numbers are stored and the mobile telephone network having at least one private base station (HBS) to which is assigned at least one mobile telephone terminal (UE), the private base station (HBS) transmits mobile telephone signals with a second identifier code (B) which is different from the first identifier code (A) and that an assignment of the mobile telephone terminal (UE) to the private base station (HBS) can be stored in the home location register (HLR, HSS), **characterized by the fact that** in the event of an access request of the mobile telephone terminal (UE) to a switching center (MSC, SGSN, MME) of the mobile telephone network, the home location register (HLR, HSS) is interrogated and the mobile telephone network sends to the mobile telephone terminal (UE) an identifier code (eB) equivalent to the second identifier code (B) if an assignment of the mobile telephone terminal (UE) to the private base station (HBS) has been stored in the home location register (HLR, HSS).

2. A method according to claim 1, **characterized b y the fact tha**t upon a registration of the private base station (HBS) in the mobile telephone network, an assignment of the mobile telephone terminal (UE) to the private base station (HBS) is stored in the home location register.

3. A method according to claim 1 or 2, **characterized b y the fact** that the geographical location of the private base station (HBS) is stored in the home location register (HLR, HSS).

4. A method according to claim 3, **characterized by the fact** that during the interrogation of the home location register (HLR, HSS), the geographical location of the private base station (HBS) is transmitted to the switching center (MSC, SGSN, MME).

5. A method according to claim 4, **characterized b y the fact tha**t the current geographical location of the mobile telephone terminal (UE) is determined and the mobile telephone network sends the equivalent identifier code (eB) to the mobile telephone terminal (UE) if the latter is located in the vicinity of the private base station (HBS).

## Patentansprüche

1. Verfahren zum Betrieb eines Mobilfunknetzes mit öffentlichen Basisstationen, insbesondere BTS, NodeB oder eNodeB, bei dem die öffentlichen Basisstationen Mobilfunksignale mit einer ersten Kennung (A) ausstrahlen, wobei dem Mobilfunknetz ein Heimatregister zugeordnet ist, in welchem Mobilfunkrufnummern hinterlegt sind, wobei das Mobilfunknetz zumindest eine private Basisstation (HBS) aufweist, welcher zumindest ein Mobilfunkendgerät (UE) zugeordnet ist, und wobei die private Basisstation (HBS) Mobilfunksignale mit einer zweiten Kennung (B) ausstrahlt, die von der ersten Kennung (A) verschieden ist, und eine Zuordnung des Mobilfunkendgerätes (UE) zu der privaten Basisstation (HBS) in dem Heimatregister (HLR, HSS) hinterlegbar ist, **dadurch gekennzeichnet, dass** bei einer Zugangsanfrage des Mobilfunkendgerätes (UE) an eine Vermittlungsstelle (MSC, SGSN, MME) des Mobilfunknetzes eine Abfrage des Heimatregisters (HLR, HSS) erfolgt und das Mobilfunknetz eine zur zweiten Kennung (B) äquivalente Kennung (eB) an das Mobilfunkendgerät (UE) sendet, wenn eine Zuordnung des Mobilfunkendgerätes (UE) zu der privaten Basisstation (HBS) in dem Heimatregister (HLR, HSS) hinterlegt ist.

2. Verfahren nach Anspruch 1, **dadurch gekennzeichnet, dass** bei einer Registrierung der privaten Basisstation (HBS) in dem Mobilfunknetz, in dem Heimatregister eine Zuordnung des Mobilfunkendgerätes (UE) zu der privaten Basisstation (HBS) hinterlegt wird.

3. Verfahren nach einem der Ansprüche 1 oder 2, **dadurch gekennzeichnet, dass** in dem Heimatregister (HLR, HSS) die geographische Lage der privaten Basisstation (HBS) hinterlegt wird.

4. Verfahren nach Anspruch 3, **dadurch gekennzeichnet, dass** bei der Abfrage des Heimatregisters (HLR, HSS) die geographische Lage der privaten Basisstation (HBS) an die Vermittlungsstelle (MSC, SGSN, MME) übermittelt wird.

5. Verfahren nach Anspruch 4, **dadurch gekennzeichnet, dass** der aktuelle geographische Aufenthaltsort des Mobilfunkendgerätes (UE) ermittelt wird und das Mobilfunknetz die äquivalente Kennung (eB) an das Mobilfunkendgerät (UE) sendet, wenn sich dieses in der Nähe der privaten Basisstation (HBS) befindet.

## Revendications

1. Procédé de mise en fonctionnement d'un réseau téléphonique mobile comportant des stations de base publiques, notamment une BTS, un NodeB (Noeud B) ou un eNodeB (Noeud B évolué), dans lequel les stations de base publiques transmettent des signaux téléphoniques mobiles comportant un premier code identificateur (A), un registre de localisation nominal dans lequel sont stockés des numéros d'abonné au téléphone mobile étant affecté au réseau téléphonique mobile et le réseau téléphonique mobile comportant au moins une station de base privée (HBS) à laquelle est affecté au moins un terminal téléphonique mobile (UE), la station de base privée (HBS) transmet des signaux téléphoniques mobiles comportant un second code identificateur (B) qui est différent du premier code identificateur (A) et en ce qu'une affectation du terminal téléphonique mobile (UE) à la station de base privée (HBS) peut être stockée dans le registre de localisation nominal (HLR, HSS), **caractérisé en ce que**, dans le cas d'une demande d'accès du terminal téléphonique mobile (UE) à un centre de commutation (MSC, SGSN, MME) du réseau téléphonique mobile, le registre de localisation nominal (HLR, HSS) est interrogé, et le réseau téléphonique mobile envoie au terminal téléphonique mobile (UE) un code identificateur (eB) équivalent au second code identificateur (B) si une affectation du terminal téléphonique mobile (UE) à la station de base privée (HBS) a été stockée dans le registre de localisation nominal (HLR, HSS).

2. Procédé selon la revendication 1, **caractérisé en ce que**, lors d'un enregistrement de la station de base privée (HBS) dans le réseau téléphonique mobile, une affectation du terminal téléphonique mobile (UE) à la station de base privée (HBS) est stockée dans le registre de localisation nominal.

3. Procédé selon la revendication 1 ou 2, **caractérisé en ce que** la localisation géographique de la station de base privée (HBS) est stockée dans le registre de localisation nominal (HLR, HSS).

4. Procédé selon la revendication 3, **caractérisé en ce que**, pendant l'interrogation du registre de localisation nominal (HLR, HSS), la localisation géographique de la station de base privée (HBS) est transmise au centre de commutation (MSC, SGSN, MME).

5. Procédé selon la revendication 4, **caractérisé en ce que** la localisation géographique courante du terminal téléphonique mobile (UE) est déterminée et le réseau téléphonique mobile envoie le code identificateur équivalent (eB) au terminal téléphonique mobile (UE) si ce dernier est situé au voisinage de la station de base privée (HBS).
